# EUROPEAN PATENT APPLICATION

(11) **EP 4 044 550 A1**
(43) Date of publication of application: **17.08.2022**
(21) Application number: 21156980.1
(22) Date of filing: 12.02.2021
(51) Int. Cl.: H04L 29/06

(54) **A PROXY AND A COMMUNICATION SYSTEM COMPRISING SAID PROXY**

(71) Applicant: Xertified AB, 752 18 Uppsala (SE)
(72) Inventor: ERIKSSON, Martin, 169 73 Solna (SE); ERICSSON, Anders, 752 18 Uppsala (SE)
(74) Representative: AWA Sweden AB

(57) **Abstract**

A proxy (150) is provided. The proxy is configured to access an authorization module (250). The authorization module is arranged to provide a unique user digital identity. The unique user digital identity is linked to a user (300). The proxy is configured for digital certificate authentication. The proxy is further configured to provide access for the user to at least one of a data network (110) and at least one resource (130) based on at least one of the unique user digital identity and digital certificate authentication. The proxy is further configured to access a management system (510). The management system is configured to control access for the user to at least one of the data network and the at least one resource based on the unique user digital identity.

## Description

### FIELD OF THE INVENTION

The present invention generally relates to proxies and communication systems comprising at least one proxy. More specifically, the present invention is related to access control.

### BACKGROUND OF THE INVENTION

The interest in connected devices and Internet-of-Things is steadily increasing within virtually every field, such as within the fields of society critical infrastructure, manufacturing, healthcare and finance. Although network security for many of these applications should be prioritized, there are currently tens or hundreds of millions of unsecured devices that are connected to various unsecure networks. The connected unsecured devices may for example range from medical appliances, manufacturing robots, traffic lights and electricity grid controllers to printers and scanners.

Existing security solutions for networks and connected devices are primarily based on a number of principles. One principle for such networks and connected devices may comprise setting the security at a network level, thereby assuming that all users and devices within the network can be trusted. However, if an intruder compromises the network or if a device within the network is directly connected to a public network, all devices on the network may be compromised. Another principle may be clustering of different usages and/or technologies and then focusing on securing clusters. However, the problem(s) may thereby be broken into a larger number of smaller problems, which lowers the security threshold. Another principle may be the use of devices in the network that listens to the traffic and analyses the content, the users and patterns and behaviors. However, the problem(s) may thereby be that the traffic is open to so called man-in-the-middle attacks where the traffic can be altered, dropped or false information being inserted as the communication is not secured on its own. An additional principle is to tailor the security for a specific hardware. However, such tailored security solutions may not allow for other devices to also be secured. Further, a principle may simply be to use a relatively low level of security, such as Secure Sockets Layer (SSL). An additional principle may be access control. Access control may be performed by, for example, the use of passwords, two-factor authentication, a hardware authentication device (such as a smart card or a hardware token), or a combination thereof.

The patent application US 20030196084A1 discloses a system of wireless devices participating in secure communications with secure networks without storing compromising information on the wireless device. The wireless device may be allowed to participate in a so-called Public Key Infrastructure (PKI). Further, the application discloses how a user is requested to provide a digital certificate for authentication before access is granted. However, a problem with the system disclosed herein is that it does not completely address the security risk of the connection between a proxy server and resources. For example, the disclosed system is at risk of a man-in-the-middle attack, i.e. eavesdropping, between the proxy server and a resource. An additional problem with the system disclosed herein is that if the proxy server is compromised, then all connected resourced may be compromised.

Hence, systems according to the prior art may not meet specific security requirements and/or be very complex. For example, they may require vast combinations of different technologies and/or techniques, making the systems complex and/or difficult to manage. Additionally, it might be difficult to securely expand or reduce the solutions provided by the prior art. Further, systems according to the prior art may not be secure enough with regards to persons with malicious intent who already have access to a network.

It is of interest to provide alternatives to network, system and device security solutions of the prior art in order to improve their security and/or manageability. Additionally, there is a wish to provide access control for systems and/or devices while securing said system and/or devices. Further there is a need to not only secure devices themselves but also the usage of said devices by keeping control of each user of each device, both for on-line and off-line use. There is also a wish to make it easier to protect devices in public and private networks, especially for legacy devices and devices from different manufacturers.

### SUMMARY OF THE INVENTION

It is an object of the present invention to provide alternatives to network, system, and device security solutions of the prior art in order to improve their security, manageability, controllability, expandability and/or reducibility. Additionally, it is an object of the present invention to provide alternatives which provide both access control and secure communication. This and other objects are achieved by providing a proxy and a communication system for access control having the features in the independent claim. Preferred embodiments are defined in the dependent claims.

Hence, according to a first aspect of the present invention, there is provided a proxy. The proxy may be understood as, for example, a hardware proxy, a proxy device, a security device, and/or a software proxy. The proxy may be configured to access an authorization module. The proxy may comprise the authorization module. The proxy may be communicatively coupled to the authorization module. The authorization module may be a software authorization module. Alternatively, the authorization module may be a hardware authorization module. The authorization module may be arranged to provide a unique user digital identity. The unique user digital identity may be an irrefutable unique user digital identity. The unique user digital identity may be linked to a user. The unique user digital identity may be linked to one single user. A software authorization module may be configured to securely store the unique user digital identity. By the term "securely store" it is further meant, for example, encrypt and/or store in an encrypted container. The authorization module may be configured to only provide the unique user digital identity to the proxy. The proxy may be configured for digital certificate authentication. By the term "digital certificate authentication" it is further meant, for example, authentication via public-key infrastructure, cryptographic protocols, and/or digital signatures. The proxy may be configured to provide access for the user to at least one of a data network and at least one resource based on at least one of the unique user digital identity and digital certificate authentication. In other words, the proxy may be configured to provide access for the user to a data network and/or one or more resources based on the unique user digital identity and/or the digital certificate authentication. By the term "provide access" it is further meant, for example, allow access, allow entry and/or enable communication. The proxy may be configured to access a management system. By the term "resource" it is further meant, for example, a software resource, a hardware resource and/or a physical resource. A "software resource" may be understood as, for example, a digital asset, a digital file, a software program. A software resource may be stored in a respective hardware resource and/or in the management system. A hardware resource may be understood as, for example, a server, a computing device, a machine, a piece of equipment, a power electronic device, and/or a medical device. The proxy may be configured to be communicatively coupled to the management system. The management system may be configured to control access for the user to at least one of the data network and the at least one resource based on the unique user digital identity. In other words, the management system may be configured to control access for the user to the data network and/or the one or more resources based on the unique user digital identity.The management system may control which of the at least one data network and the at least one resource that the proxy may be configured to provide access to. The proxy may be understood as having access rights. By the term "rights" it is further meant, for example, certificates and/or keys. The proxy may use the access rights in order provide access to the at least one resource and/or the data network. The management system may be configured to update, add, remove, and/or limit access rights of the proxy. The management system may be configured for access control. The proxy may need to access the management system to receive and/or update access rights. The management system may be communicatively coupled to a certificate authority. The management system may be configured to register and/or issue certificates via a certificate authority. Thus, the present invention is based on the idea of providing access control and secure communication based on a unique user digital identity and digital certificate authentication. The present invention is advantageous in that its access control may be implemented on a per user and/or resource basis. Furthermore, the present invention increases the efficiency and reliability of asset management. In other words, the present invention reduces the complexity of asset management. The term "asset" may be understood as, for example, a user device, a data network and/or a resource. The present invention is further advantageous in that it controls access to and from a resource while at the same time providing a unique user digital identity for each user that uses the resource.

According to another aspect of the present invention, there is provided a communication system for access control. The communication system may comprise a data network. The communication system may comprise at least one first proxy according to the first aspect of the present invention. The at least one first proxy may be communicatively coupled to the data network. The at least one first proxy may be coupled to the data network via wire and/or wirelessly. The communication system may comprise at least one user device. By the term "user device" it is meant, for example, a computer, a tablet, a computing device, a handheld device, and/or a smartphone. The at least one user device may be configured to access at least one resource accessible via the data network. Each first proxy of the at least one first proxy may be configured for communication with one respective user device of the at least one user device. In other words, each first proxy may be configured for communication with one single user device. An only (i.e. unique) first channel for communication between the respective user device and the data network may be through the respective first proxy configured for communication with the respective user device. Thereby, there is a 1-to-l coupling between a first proxy and a respective user device. Each first proxy of the at least one first proxy may be further configured to control a communication through the first channel for communication based on digital certificate authentication. By the term "control a communication", it is meant, for example, allow, revoke, manage, route and/or limit a communication. The communication system may comprise a management system coupled to the data network. The management system may be configured to control access for the respective user device to at least one of the data network and the at least one resource via the data network based on a unique user digital identity of the respective first proxy configured for communication with the respective user device.

The proxy may be further configured to provide access for a user device operated by the user to at least one of the data network and the at least one resource based on at least one of the unique user digital identity and digital certificate authentication. Hence, the proxy may be configured to provide access for a user device operated by the user to the data network and/or the one or more resources based on the unique user digital identity and/or digital certificate authentication The user device may only gain access to at least one of the data network and the at least one resource via the proxy. The proxy may be a software proxy installed on the user device. The authorization module may be comprised by the software proxy. The authorization module may be comprised by and/or installed on the user device. Alternatively, the proxy may be hardware proxy communicatively coupled to the user device. The hardware proxy may comprise the authorization module. The hardware proxy may be communicatively coupled to an authorization module comprised by and/or installed on the user device. The proxy may be further configured to control access to the user device based on digital certificate authentication. The proxy may be further configured to control access to the user device based on a unique digital identity. By the term "control access to the user device" it is meant, for example, allow, and/or revoke communication with the user device, and/or accept and/or decline a communication attempt to the user device. Hence, the user device may be protected from being accessed. Further, resources and/or data networks may be protected from being accessed. The proxy may be further configured to encrypt and decrypt communication to and from the respective user device via the proxy. By the term "communication", it is further meant, for example, traffic. Said encryption and decryption may be based on digital certificate authentication. Thereby, the communication may be further secured. The user may have a respective proxy, wherein the proxy may be configured to access a unique user digital identity linked to the user. The user may use his/her respective proxy in order gain access to a plurality of user devices. The plurality of user devices may be configured to only be accessed by the user using the respective proxy. Hence, the user may use the proxy to gain access for a user device of the plurality of devices by using a single proxy. Further, the proxy device may be used without a user device to provide access to a resource. For example, the respective proxy of the user may be used to provide access for the user to at least one resource, such as, for example, a building, an off-line construction equipment, to a user device, and for a user device to at least one of a data network and at least one resource. The present embodiment is advantageous in that it controls access to and from any user device. The present embodiment is further advantageous in that it increases the security for user devices. The present embodiment is also advantageous in that it reduces the complexity of asset management since it can be managed on a per user basis rather than on a per user device basis.

The management system may be configured to control access for the user to at least one of the data network and the at least one resource based on the unique user digital identity and digital certificate authentication. Hence, the management system may be configured to control access for the user to the data network and/or the one or more resources based on the unique user digital identity and digital certificate authentication. The management system may control which user that has access to the data network or a specific resource based on the unique user digital identity. The management system may comprise a user list. The user list may comprise all unique user digital identities which are allowed access to at least one of the data network and at least one resource. The management system may compare a unique user digital identity provided by the proxy to the user list. The management system may control access for the user to at least one of the data network and the at least one resource based on said comparison. Thereby, the access control of resources, users, user devices, and/or data networks can be centralized which may increase the security.

The proxy may be further configured for communication with a user device. The proxy may be configured to route all communication to and from the user device through the proxy. Thereby, an only channel for communication with a user device is through the proxy configured for communication with the user device. The proxy may be configured to disable all possible communication channels of the user device except a channel through the proxy. For example, the proxy may be configured to disable communication modules of the user device. By the term "communication module" it is meant, for example, network chipset, network module, Bluetooth module, WiFi-module, communication port, LAN-port, RJ45-port, USB-port, and/or wireless module. The present embodiment is advantageous in that the degree of control is increased. Hence, the security is increased for the user device.

The proxy may be further configured for communication with the user device, to perform a monitoring of at least one of software of the user device, hardware of the user device, user data, a communication to the user device, and a communication from the user device. By the term "monitoring" it is further meant, for example, logging, checking, scanning, data mining and/or tracking. By the term "user data", it is meant substantially any data associated with the user such as, for example, a user device identifier, a user device ID, a location of the user device, a time period when the user device was used, an identifier of an resource accessed by the user, a time when a resource was accessed by the user, or operation data of a resource accessed by the user. The proxy may be configured to perform monitoring for at least one piece of software of the user device. The proxy may be configured to perform monitoring for at least one piece of hardware of the user device. The proxy may be configured to perform monitoring of all communication routed through the proxy. The proxy may be configured to store information based on said monitoring in at least one of the proxy, the user device, the at least one resource and the management system. The present embodiment is advantageous in that it increases the potential of asset management, which increases the security.

At least one of the proxy and the management system may be further configured to perform an analysis of said information. Said analysis may be based on said information and a reference information. The analysis may be understood as, for example, a comparison. At least one of the proxy and the management system may be further configured to compare said information and a reference information. By the term "reference information" it is meant, for example, approved information, secure information, information associated with normal operation. The reference information may comprise or constitute predetermined information. At least one of the proxy and the management system may be configured to identify patterns of, and/or within, said information. The reference information may be understood as, for example, a reference pattern. The analysis may be performed based on said pattern and said reference pattern. At least one of the proxy and the management system may be configured to update the reference information. The proxy may be configured to update the reference based on at least one of said information and said analysis. The analysis may be performed by software and/or hardware configured for artificial intelligence, machine intelligence, data mining and/or machine learning. The analysis of said information may increase the security.

Stored information which is based on said user data may be understood as, for example, user information. User data may be associated with a respective user. User data may be understood as, for example, a user profile. At least one of the proxy and the management system may be configured to perform an analysis based on said user information associated with a respective user and reference information. The analysis based on said user information associated with a respective user and reference information may be configured to identify patterns of, and/or within said user data. Patterns of, and/or within said user information may relate to, for example, which user device(s) that were accessed by the user, when a user device was accessed, where a user device was accessed, which resource that was accessed by the user, when a resource was accessed by the user, operation data of a resource accessed by the user, or handling of a resource by the user. For example, said analysis of user information may indicate that a user is accessing and/or operating at least one of a user device and a resource in manner which deviates from the reference information. At least one of the proxy and the management system may be configured to control access based on said indicated deviation. Said deviation may be understood as, for example, substantially any deviation and/or change of the accessing and operation made by the user, an accident or an incident caused by the user operating at least one of the user device and the resource, a performance of operation of at least one of the user device and the resource. The user data may further comprise how often a deviation has occurred.

The reference information may be retrieved from at least one of a storage of the proxy, the user device, the at least one resource and the management system. The storage of the proxy may be understood as a, for example, non-volatile memory comprised by and/or coupled to the proxy, or a storage module of the proxy. The management system may be configured to transmit the reference information to the proxy. The proxy may be further configured to send an alarm based on said analysis to at least one of the user device and the management system. The proxy may be configured to send said alarm to at least one of the user device, the at least one resource and the management system. The proxy may be further configured to create a logfile based on at least one of said monitoring and said analysis. The proxy may be further configured to send said logfile to at least one of the user device and the management system.

The proxy may be further configured for communication with a user device. The proxy may be further configured to control at least one of software of the user device and hardware of the user device. Hence, the proxy may be further configured to control the user device's software and/or hardware. The proxy may control which software of the user device that is allowed to be run on the user device. The proxy may be configured to deny software of the user device to run, wherein said software may be deemed unallowed. The proxy may be configured to disable hardware of the user device. For example, the proxy may disable all communication hardware of the user device. The proxy may be further configured to control at least one of software of the user device and hardware of the user device based on an alarm based on said analysis. Hence, the proxy may be understood as being configured to operate proactively. Thereby, the proxy may provide an increased security for the user device. The management system may be configured to instruct the proxy to control at least one of software of the user device and hardware of the user device. The present embodiment is advantageous in that it increases the potential of asset management, which increases the security.

The proxy may be further configured to monitor at least one of software of the user device, hardware of the user device, user data, a communication to the user device, and a communication from the user device. The proxy may be further configured to store information based on said monitoring in at least one of the proxy, the user device, the at least one resource and the management system. At least one of the proxy and the management system may be further configured to perform an analysis of said information based on said monitoring. Said analysis may be based on said information and a reference information. Said control may be based on said analysis. In other words, the proxy may be configured to control at least one of software of the user device, hardware of the user device, a communication to the user device, and a communication from the user device based on said analysis. The analysis may identify at least one difference between said information and said reference information. The analysis may further identify which of the software of the user device, hardware of the user device, a communication to the user device, and a communication from the user device that caused the difference. Further, the proxy may be configured to control at least one of software of the user device, hardware of the user device, a communication to the user device, and a communication from the user device based on said identification. For example, the proxy may identify that a piece of hardware of the user device is causing a difference, and may control said piece of hardware by, for example, disabling said piece of hardware or control the communication to and from said device based on the analysis. By the term "control the communication", it is further meant substantially any control and/or change of the communication such as, for example, adapt the communication, limit the communication, or shut down the communication. Hence, the proxy may provide an increased security for the user device. The present embodiment is advantageous in that it provides a fast security response to an identified difference. The present embodiment is advantageous in that it is adaptive and can protect assets to previously unknown threats.

The proxy may further comprise a physical electronic authorization module. The physical electronic authorization module may be arranged to provide the unique user digital identity. The physical electronic authorization module may be understood as for example, a physical electronic authorization device, a hardware authentication device, and/or an embedded integrated circuit chip. The physical electronic authorization module may be configured for one-time passwords. The physical electronic authorization module may be configured for public-key cryptography. The physical electronic authorization module may be configured to provide personal identification. The physical electronic authorization module may be configured to provide personal authentication. The physical electronic authorization module may provide an increased security. The present embodiment is advantageous in that the physical electronic authorization module is more secure than a non-physical authorization module.

The proxy may be further configured to be coupled with a user device. The proxy may be further configured to be communicatively coupled with a user device. The proxy may be configured to be wirelessly coupled with a user device. For example, the proxy may be configured to be coupled with a user device via, for example, Bluetooth, WiFi, NFC, and/or radio link. The proxy may be configured to be coupled with a user device via a communication port. The communication port may be, for example, a USB-port a RJ45-port or a LAN port. The present embodiment is advantageous in that the proxy coupled to the user device provides a physical buffer of security.

The communication system may further comprise at least one second proxy. Each second proxy of the at least one second proxy may be configured for communication with one respective resource of the at least one resource. An only (i.e. unique) second channel for communication between the data network and the respective resource may be through the respective second proxy configured for communication with the respective resource. Each second proxy may be configured for digital certificate authentication and configured to control a communication through the second channel for communication based on digital certificate authentication. Thereby, access to a resource may be based on digital certificate authentication. Further, the management system may be configured to update, add, remove, and/or limit access rights of the second proxy. The second proxy may need to access the management system to gain and/or update access rights. Thereby, the security of the communication system may be increased. The present embodiment is advantageous in that all user devices and resource can be protected by a respective proxy. The present embodiment is further advantageous in that access to and from every user device and resource is separately controlled.

The only channel for communication with the respective user device may be through the proxy configured for communication with the respective user device. The only channel for communication with the respective resource may be through the second proxy configured for communication with the respective resource. Thereby, there is a 1-to-1 connection between the respective resource and the respective second proxy, which increases the security of the communication system.

The management system may be further configured for controlling access to the at least one user device. At least one of the at least one resource may be configured for digital certificate authentication. The system may comprise at least two resources, wherein at least one resource is configured for digital certificate authentication, and wherein the remaining resources may be communicating with the data network via a respective second proxy. Hence, all resources may be secured via digital certificate authentication.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Figs. 1 to 3 schematically show communication systems according to exemplifying embodiments of the present invention,
Figs. 4a, 4b and 4c schematically show user devices and proxies according to exemplifying embodiments of the present invention,
Figs. 5 and 6 schematically show proxies according to exemplifying embodiments of the present invention.

### DETAILED DESCRIPTION

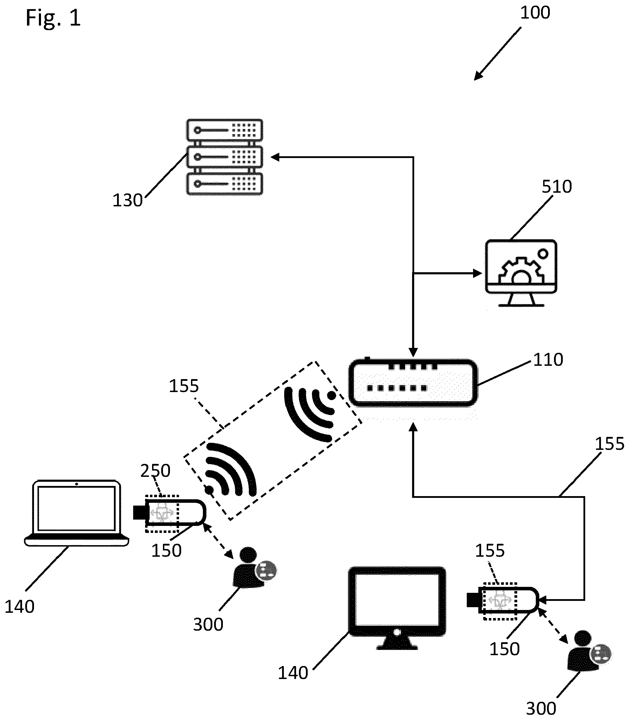

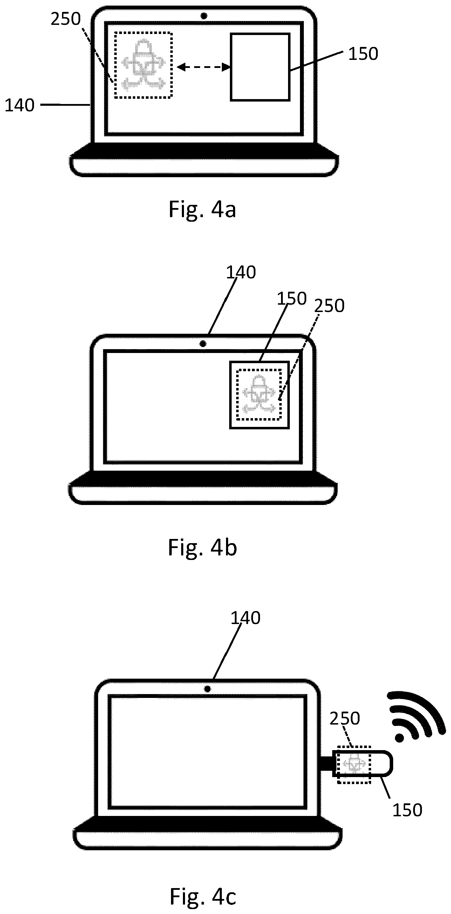

Fig. 1 schematically shows a communication system 100. The communication system 100 comprises a data network 110. Here, the data network 110 is shown as a network hub or switch, but it is to be understood that the data network 110 may be substantially any of a cloud network, a physical wired network, a distributed network, a wireless network or any combination thereof. The communication system 100 further comprises a management system 510 coupled to the data network 110. Here, the management system 510 is exemplified as a computing device coupled to the data network 100, but it should be noted that the management system 510 may substantially any kind of a software program, an admin user device or a server. The communication system 100 comprises a resource 130 communicatively coupled to the data network 110. Here, the resource 130 is exemplified as a server, but it should be noted that the resource 130 may be substantially any kind of software resource, hardware resource and/or physical resource. A "software resource" may be understood as, for example, a digital asset, a digital file, a software program. A software resource may be stored in a respective hardware resource and/or in the management system. A hardware resource may be understood as, for example, a server, a computing device, a machine, a piece of equipment, a power electronic device, and/or a medical device. The communication system 100 comprises two proxies 150. Here, the proxies 150 are exemplified as USB-dongles, but it should be noted that each proxy may be substantially any kind of a hardware proxy, a proxy device, a security device, and/or a software proxy. Each proxy 150 is communicatively coupled to a user device 140. Hence, there is a 1-to-1 coupling between each proxy 150 and a respective user device 140. Each proxy 150 device comprises an authorization module 250 arranged to provide a unique user digital identity. Here, the authorization module 250 is exemplified as a physical electronic authorization module, but it should be noted that the authorization module may be substantially any kind of a hardware authorization module, and a software authorization module (see Fig. 4a or Fig. 4b). Hence, the unique use digital identities provided by each proxy 150 are different from each other. The authorization module 250 of each proxy 150 is comprised by the proxy 150. The unique user digital identity is linked to a respective user 300. Each proxy 150 is configured for digital certificate authentication. Each proxy 150 is configured to provide access for a user device 140 operated by the user 300 to at least one of the data network 110 and the resource 130 based on at least one of the unique user digital identity and digital certificate authentication. The user 300 may be understood as an operator of a respective user device 140. Hence, the user 300 may access at least one of the data network 110 and the resource 130 via the respective user device 140, wherein said access is provided by the respective proxy 150 coupled to the respective user device 140. There is an only first channel for communication 155 between each respective user device 140 and the data network 110. The only first channels for communication 155 are through the respective proxies 150 coupled to the respective user devices 140, which is through their respective proxies 150. The proxies 150 are configured to control a communication through their respective first channels for communication 155 based on digital certificate authentication. Hence, all communication to and from a user device 140 is secured by a respective proxy 150 coupled to said user device 140. In other words, the respective proxy 150 is configured to route all communication to and from the respective user device 140 through the respective proxy 150. The proxy 150 may be further configured to allow access to a respective user device 140 based on at least one of a unique digital identity and digital certificate authentication. Hence, the proxy 150 may control access through their respective first channel for communication 155 based on at least one of unique user digital identity and digital certificate authentication. It is to be understood that, by the term "unique digital identity" it is further meant, for example, a unique user digital identity, and/or a unique device digital identity. One of the two proxies 150 is coupled to the data network 110 via a wireless channel for communication, while the other of the two proxies 150 is coupled to the data network 110 via wired channel for communication. However, it is to be understood that there may be any number of wired and/or wireless connections of proxies 150 to the data network 110. For example, a communication system may only allow proxies 150 to be coupled to the data network via wire or wirelessly. The proxies 150 are configured to access the management system 510. The proxies 150 may access the management system 510 via the data network 110. The management system 510 is configured to control access for the user devices 140 to at least one of the data network 110 and the resource 130 based on the unique user digital identity. The management system 510 may further be configured to 510 control access for the user devices 140 to at least one of the data network 110 and the resource 130 based on digital certificate authentication. Further, the resource 130 may be configured for digital certificate authentication.

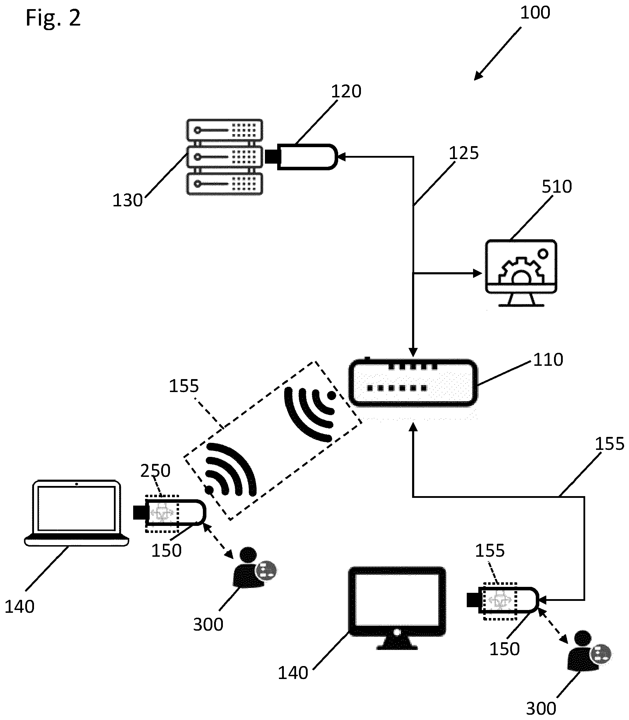

Fig. 2 schematically shows a communication system 100 according to an exemplifying embodiment of the present invention. It should be noted that Fig. 2 comprises features, elements and/or functions as shown in Fig. 1 and described in the associated text. Hence, it is also referred to that figure and text for an increased understanding.

A difference between the communication system 100 in Fig. 2 and the communication system shown in Fig. 1 is that the communication system 100 in Fig. 2 comprises a second proxy 120. The second proxy 120 is configured for communication with one respective resource 130. An only second channel for communication 125 between the data network 110 and the respective resource 130 is through the respective second proxy 120 configured for communication with the respective resource 130. The second proxy 120 is configured for digital certificate authentication and configured to control a communication through the second channel for communication 125 based on digital certificate authentication. Thereby, the resource 130 is secured by the second proxy 120. The second proxy 120 may be configured to access the management system 510. The second proxy 120 may access the management system 510 via the second channel for communication 125 and/or via the data network 110. The management system 510 may be configured to control access for the resource 130 to at least one of the data network 110 and a user device 140 based on digital certificate authentication. It is to be understood that the communication system 100 may comprise any number of resources 130. Each resource 130 may be secured, either via a second proxy 120 or by being configured for digital certificate authentication.

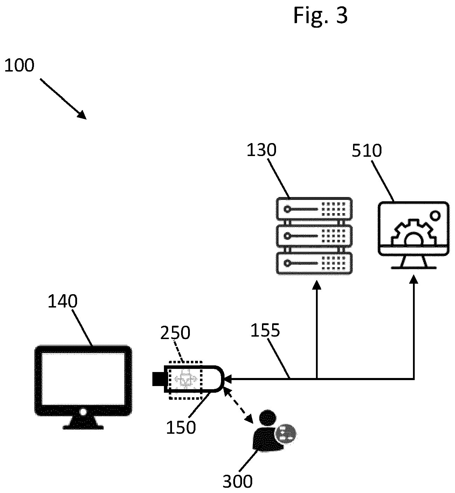

Fig. 3 schematically shows a communication system 100 according to an exemplifying embodiment of the present invention. It should be noted that Fig. 3 comprises features, elements and/or functions as shown in Figs. 1 and 2 and described in the associated texts. Hence, it is also referred to those figures and texts for an increased understanding.

The communication system 100, as shown in Fig. 3, comprises a proxy 150, a user device 140, a resource 130 and a management system 510. The proxy 150 comprises an authorization module 250. The authorization module 250 is arranged to provide a unique user digital identity, wherein the unique user digital identity is linked to a user 300. The proxy 150 is configured provide access to the user device 140 operated by the user 300. The user device 140 is communicatively coupled to the resource 130 and to the management system 510 via the proxy 150 along a first channel for communication 155. Hence, the user 300 operating the user device 140 may access the resource 130 or the management system 510 via the proxy 150. It is to be understood that the resource 130 and/or the management system 510 may be coupled to a data network 110. However, the resource 130 and the management system 510 may be coupled to different data networks 110.

Figs. 4a and 4b schematically show user devices 140 comprising a proxy 150 according to an exemplifying embodiment of the present invention. It should be noted that Figs. 4a and 4b comprise features, elements and/or functions as shown in Figs. 1 to 3 and described in the associated texts. Hence, it is also referred to those figures and text for an increased understanding.

Fig. 4a shows a user device 140. The user device 140 comprises a proxy 150. The proxy 150 may be understood as being installed on the user device 150. Further, the user device 140 comprises an authorization module 250. The authorization module 250 may be understood as being installed on the user device 140. The proxy 150 is configured to access the authorization module 250. In other words, the proxy 150 is configured to communicate with the authorization module 250. The authorization module 250 is configured to provide a unique user digital identity. The proxy 150 may be configured to perform a monitoring of at least one of software of the user device 140, hardware of the user device 140, a communication to the user device 140, and a communication from the user device 140. The proxy 150 may be configured to store information based on said monitoring in at least one of the proxy 150, the user device 140, a resource to which the user device 140 is coupled and a management system to which the user device 140 is coupled. The proxy 150 may be configured to perform an analysis of said information. Said analysis may be based on said information and a reference information. Said reference information may be retrieved from at least one of the proxy 150, the user device 140, said resource and said management system. The proxy 150 may be configured to control at least one of software of the user device 140 and hardware of the user device 140. The control may be based on said analysis.

Figs. 4b schematically shows a user device 140 comprising a proxy 150 according to an exemplifying embodiment of the present invention. A difference between the proxy 150 of Fig. 4b and the proxy of Fig. 4a is that the proxy 150 of Fig. 4b comprises an authorization module 250. In other words, software of the proxy 150 may comprise the authorization module 250. Thereby, the authorization module 250 may be installed on the user device 140 together with the proxy 150.

Figs. 4c schematically shows a user device 140 and a proxy 150 according to an exemplifying embodiment of the present invention. It should be noted that Fig. 4c comprises features, elements and/or functions as shown in Figs. 1 to 4b and described in the associated texts. Hence, it is also referred to those figures and text for an increased understanding. The proxy device 150 of Fig. 4c is coupled to a port of the user device 140. The proxy device 150 comprises an authorization module 250. The proxy 150 is configured for wireless communication. Thereby, the user device 140 coupled to the proxy 150 may communicate through the proxy 150. It is to be understood that the proxy 150 may comprise a communication port, such as, for example a LAN-port, via which the proxy 150 may be coupled to a data network and/or a server. The proxy 150 may be configured to shut down, and/or disable, all communication of the user device 140. Thereby, the proxy 150 may route all communication to and from the user device 140 to pass through the proxy 150. Further, the proxy 150 may be configured to provide access to and from the user device 150. The proxy 150 may be configured to provide, and/or control, access to and from the user device 140 based on digital certification authentication and/or a unique digital identity. The proxy 150 may be configured for monitoring, controlling and/or analyzing, as described in the text relating to Fig. 4a. However, it is to be understood that the proxy 150 may comprise hardware and/or software configured to perform said monitoring, controlling and/or analyzing. Further, the proxy 150 may configured to instruct hardware and/or software of the user device 140 to perform at least a part of said monitoring, controlling and/or analyzing. Thereby, according to an exemplary embodiment, the proxy 150 can be a lightweight device which may instruct the hardware and/or software of the user device 140 to perform the more computationally requiring steps of monitoring, controlling and/or analyzing. However, it is to be understood that, according to another exemplifying embodiment, that the proxy 150 may comprise hardware and/or software capable of said monitoring, controlling and/or analyzing. Furthermore, it is to be understood that the proxy 150 may not comprise the authorization module 250. For example, the user device 140 to which the proxy 150 is coupled may comprise an authorization module 250.

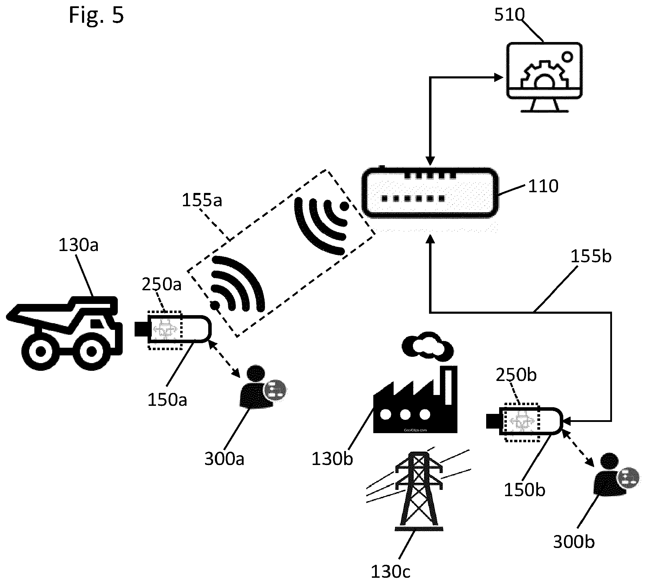

Fig. 5 schematically show proxies 150a, 150b according to an exemplifying embodiment of the present invention. Fig. 5 shows a proxy 150a wirelessly coupled to a data network 110 via a first channel for communication 155a, which may be understood as a first proxy 150a. The first proxy 150a comprises an authorization module 250a configured to provide a unique user digital identity, which is linked to a user 300a, which may be understood as a first user 300a. The first proxy 150a is coupled to a resource 130a, which may be understood as a first resource130a. Here, the first resource 130a is exemplified as a tractor, but it should be noted that the first resource 130a may be substantially any kind of working machine, machinery, vehicle or piece of equipment. The first proxy 150a is configured to provide access for the first user 300a to the first resource 130a. At least one of the proxy 150a and the management system 510 may be configured to control access for the user 300a to the resource 130a. The access control for the user 300a to the resource 130a may be based on, for example, user data, wherein user data may comprise at least one of when the resource 130a was accessed by the user 300a, operation data of the resource 130a accessed by the user 300a, or handling of the resource 130a by the user 300a. For example, at least one of the proxy 150a, the resource 130a and the management system 510 may configured perform an analysis of user data may which indicate that the user 300a is accessing and/or operating the resource 130a in manner which deviates from a reference information. Said deviation may be understood as, for example, substantially any deviation and/or change of the accessing and operation of the resource 130a made by the user 300a, an accident or an incident caused by the user 130a operating the resource 130a, a performance of operation of the resource 130. Said access control for the user 300a to the resource 130 may be based on said deviation. Said access control may comprise, for example, limit access for the user 300a to the resource 130a. By the term "limit access", it is further meant, for example, substantially any control and/or limitation of access to the resource 130a, revoke access for the user 300a to the resource 130a, limit at least one function of the resource 130a for the user 300a. Fig. 5 shows an additional proxy 150b, which may be understood as a second proxy 150b. The second proxy 150b is coupled via a wire to the data network 110 via a first channel for communication 155b. The second proxy 150b comprises an authorization module 250b configured to provide a unique user digital identity, which is linked to another user 300b, which may be understood as a second user 300b. The second proxy 150b is configured to provide access for the second user 300b to the two resources 130b, 130c, which may be understood as the second resource 130b and the third resource 130b, respectively. Here, the second resource 130b and the third resource 130b are exemplified as a plant and a power electronic transmission line, respectively, but it should be noted that the second resource 130b and the third resource 130c may be substantially any kind of building, office, gate or infrastructure. Hence, the second user 300b may use one single proxy 150b to access a plurality of resources 130b, 130c. The proxies 150a, 150b are configured to access a management system 510. The proxies 150a, 150b are communicatively coupled to the management system 510 via the data network 110. The management system 510 is configured to control access for the users 300a, 300b to the resources 130a, 130b, 130c based on the respective unique user digital of the respective proxies 150a, 150b. For example, the management system 510 may revoke access for the user 300a to the resource 130a. Further, the management system 510 may grant access for the user 300b to the resource 130a. The management system 510 may control when and/or where a user 300a, 300b can access a resource 130a, 130b, 130c. For example, the user 300a, 300b may only be granted access to a resource 130a, 130b, 130c during a predetermined time period, e.g. (normal) working hours. Different users 300a, 300b may have access, via their respective proxies 150a, 150b, to a resource 130a, 130b, 130c at different times. Further, the management system 510 and/or a resource 130a, 130b, 130c may be configured to control what functions of the resource 130a, 130b, 130c that the user 300a, 300b may access. Furthermore, different users 300a, 300b may have access to different functions of the same resource 130a, 130b, 130c.

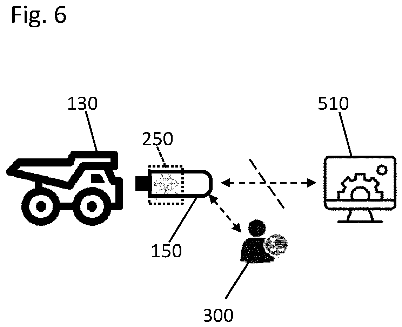

Fig. 6 schematically shows a proxy 150 according to an exemplifying embodiment of the present invention. The proxy 150 is configured for digital certificate authentication. The proxy 150 comprises an authorization module 250 configured to provide a unique user digital identity, which is linked to a user 300. The proxy 150 is coupled to a resource 130. The user 300 may be understood as an operator of the resource 130. The user 300 may only access the resource 130 by using the proxy 150 which is configured to provide access to the resource based on digital certificate authentication and/or the unique user digital identity.

The proxy 150 is configured to access a management system 510. The proxy 150 may be configured to provide access for the user 300 to the resource without being communicatively coupled to the management system 510, which is indicated in Fig. 6 by the diagonal dashed line crossing the arrow between the proxy 150 and the management system 510. The proxy 150 may be configured to access the management system 510 at a first point of time and to provide access for the user 300 to the resource 130 at a second point of time, wherein the second point of time is later than the first point of time. The proxy 150 may require to access the management system 510 in order to provide access for the user 300 to the resource 130 for a predetermined time period. For example, the user 300 may couple the proxy 150 to the management system at a beginning of a workday, wherein the proxy 150 can then provide access to the resource 130 for the remainder of that workday.

The resource 130 may be configured for digital certificate authentication. Further, the resource 130 may be configured to control access to said resource 130 based on at least one of digital certificate authentication and a unique user digital identity. The resource 130 may be configured to access the management system 510. The management system 510 may be configured to control, and/or update, access rights to the resource 130 when the resource 130 is coupled to the management system 510. For example, the resource 130 may be coupled to the management system 510 according to a predetermined schedule, during which access rights to the resource 130 may be controlled, and/or updated. For example, the resource 130 may be coupled to the management system 510 once a week, once a month, or another predetermined time period. Said coupling of the resource 130 to the management system 510 may be part of a scheduled maintenance of the resource 130. The proxy 150 may be configured to, based on input received from the resource 130, change, alter or adjust the access rights for the user 300 to access, operate or use said resource 130. The proxy 150 may, based on a combination of input received from the resource 130 and input received from the management system 510, change, alter or adjust the access rights for the user 300 to access, operate or use said resource 130. By the term "input", it is further meant, for example, a message, a prompt, or an update. The input proxy, the resource and/or the management system may be configured to communicate said input based on at least one of digital certificate authentication and the unique user digital identity.

The person skilled in the art realizes that the present invention by no means is limited to the preferred embodiments described above. On the contrary, many modifications and variations are possible within the scope of the appended claims. For example, the communication system 100 may comprise a plurality of proxies 150, wherein at least some of the plurality of proxies 150 are configured as software proxies, and wherein at least some of the plurality of proxies are configured as hardware proxies. For example, the communication system 100 may comprise a plurality of resources 130, wherein at least some of the plurality of resources 130 are communicatively coupled to at least one of the data network 110 and the management system 510. Further, the communication may comprise any number of resources 130 and proxies 150.

## Claims

1. A proxy (150),
configured to access an authorization module (250), wherein the authorization module is arranged to provide a unique user digital identity, wherein the unique user digital identity is linked to a user (300), wherein the proxy is
configured for digital certificate authentication, and configured to provide access for the user to at least one of a data network (110) and at least one resource (130) based on at least one of the unique user digital identity and digital certificate authentication, and
configured to access a management system (510), wherein the management system is configured to control access for the user to at least one of the data network and the at least one resource based on the unique user digital identity.

2. A proxy according to claim 1, wherein the proxy is further configured to provide access for a user device (140) operated by the user to at least one of the data network and the at least one resource based on at least one of the unique user digital identity and digital certificate authentication, and wherein the proxy is further configured to control access to the user device (140) based on digital certificate authentication.

3. A proxy according to claim 1 or 2, wherein the management system is configured to control access for the user to at least one of the data network and the at least one resource based on the unique user digital identity and digital certificate authentication.

4. A proxy according to any of the preceding claims, wherein the proxy is further configured for communication with a user device (140), and to route all communication to and from the user device through the proxy.

5. A proxy according to any of the preceding claims, wherein the proxy is further configured for communication with a user device (140), to perform a monitoring of at least one of software of the user device, hardware of the user device, user data, a communication to the user device, and a communication from the user device, and to store information based on said monitoring in at least one of the proxy, the user device, the at least one resource and the management system.

6. A proxy according to claim 5, wherein at least one of the proxy and the management system is further configured to perform an analysis of said information, wherein said analysis is based on said information and a reference information.

7. A proxy according to claim 6, wherein the reference information is retrieved from at least one of a storage of the proxy, the user device, the at least one resource and the management system.

8. A proxy according to any of the preceding claims, wherein the proxy is further configured for communication with a user device (140), and to control at least one of software of the user device and hardware of the user device.

9. A proxy according to claim 8, wherein the proxy is further configured to monitor at least one of software of the user device, hardware of the user device, user data, a communication to the user device, and a communication from the user device, and to store information based on said monitoring in at least one of the proxy, the user device, the at least one resource and the management system, and wherein at least one of the proxy and the management system is further configured to perform an analysis of said information based on said monitoring, wherein said analysis is based on said information and a reference information, and wherein said control is based on said analysis.

10. A proxy according to any of the preceding claims, further comprising
a physical electronic authorization module (250) arranged to provide the unique user digital identity.

11. A proxy according to claim 10, wherein the proxy is further configured to be coupled with a user device (140).

12. A communication system (100) for access control, comprising
a data network (110);
at least one first proxy (150) according to claim 1, communicatively coupled to the data network;
at least one user device (140) configured to access at least one resource (130) accessible via the data network;
wherein each first proxy of the at least one first proxy configured for communication with one respective user device of the at least one user device, wherein an only first channel for communication (155) between the respective user device and the data network is through the respective first proxy configured for communication with the respective user device,
wherein each first proxy of the at least one first proxy is further configured to control a communication through the first channel for communication based on digital certificate authentication, and
a management system (510) coupled to the data network, wherein the management system is configured to control access for the respective user device to at least one of the data network and the at least one resource via the data network based on a unique user digital identity of the respective first proxy configured for communication with the respective user device.

13. A communication system according to claim 12, further comprising at least one second proxy (120),
wherein each second proxy of the at least one second proxy is configured for communication with one respective resource of the at least one resource, wherein an only second channel for communication (125) between the data network and the respective resource is through the respective second proxy configured for communication with the respective resource, and
wherein each second proxy is configured for digital certificate authentication and configured to control a communication through the second channel for communication based on digital certificate authentication.

14. A communication system according to any of claims 12 to 13, wherein the management system is further configured for controlling access to the at least one user device.

15. A communication system according to any of claims 12 to 14, wherein at least one of the at least one resource is configured for digital certificate authentication.
